# EUROPEAN PATENT SPECIFICATION

(11) **EP 2 804 186 B1**
(45) Date of publication and mention of the grant of the patent: **27.12.2017**
(21) Application number: 13167616.5
(22) Date of filing: 14.05.2013
(51) Int. Cl.: H01F 1/00, C01G 49/08

(54) **COATED MAGNETIC NANOPARTICLES**
BESCHICHTETE MAGNETITNANOPARTIKEL
NANOPARTICULES DE MAGNÉTITE REVÊTUES

(43) Date of publication of application: 19.11.2014
(73) Proprietor: King Saud University, 11421 Riyadh (SA)
(72) Inventor: Atta, Ayman Mohamady, 11333 Riyadh (SA); Dyab, Amro Khalil Fakhry, 11333 Riyadh (SA)
(74) Representative: Scholz, Volker

(56) References cited:
- EP-B1- 2 505 558
- ZHICHUAN XU ET AL: "Organic phase synthesis of monodisperse iron oxide nanocrystals uisng iron chloride as precursor", NANOSCALE, ROYAL SOCIETY OF CHEMISTRY, UNITED KINGDOM, vol. 2, no. 6, 1 June 2010 (2010-06-01), pages 1027-1032, XP002637306, ISSN: 2040-3364, DOI: 10.1039/B9NR00400A [retrieved on 2010-05-11]
- JU B ET AL: "Enhanced oil recovery by flooding with hydrophilic nanoparticles", CHINA PARTICUOLOGY, ELSEVIER, NL, vol. 4, no. 1, 1 February 2006 (2006-02-01), pages 41-46, XP022937311, ISSN: 1672-2515, DOI: 10.1016/S1672-2515(07)60232-2 [retrieved on 2006-02-01]
- DATABASE COMPENDEX [Online] ENGINEERING INFORMATION, INC., NEW YORK, NY, US; May 2001 (2001-05), CHUN C-L ET AL: "Oil spill remediation using magnetic separation", XP002715319, Database accession no. E2001266558474 & JOURNAL OF ENVIRONMENTAL ENGINEERING MAY 2001 AMERICAN SOCIETY OF CIVIL ENGINEERS US, vol. 127, no. 5, May 2001 (2001-05), pages 443-449, DOI: 10.1061/(ASCE)0733-9372(2001)127:5(443)

## Description

The present application relates to a method for the preparation of coated magnetite nanoparticles. Superparamagnetic nanoparticles (NP) represent one of the most exciting prospects in nanotechnology because they can be easily separated from a matrix by using a magnetic field without retaining residual magnetism (no agglomeration) after removal of the field. Several types of iron oxides have been used in the field of magnetic NPs; mostly includes Fe3O4 (magnetite), α-Fe2O3 (hematite, weakly ferromagnetic or antiferromagnetic), γ-Fe2O3 (maghemite, ferrimagnetic), FeO (wüstite, antiferromagnetic), ε-Fe203 and β-Fe2O3. Among which magnetite and maghemite are popular candidates since its biocompatibility have already proven in bio labelling and bio separation (Teja et al., Prog. Cryst. Growth Charact. Mater, 2009, 55, 22-45). Table 1 summarizes the different synthetic strategies of magnetite nanoparticles (Ho, UMI number 3282300, 2007).

**Table 1: different synthetic strategies of magnetite nanoparticles.**

| Approaches | Size | Advantages | Disadvantages |
|---|---|---|---|
| Physical methods (aerosol/vapor deposition; spray and dry laser pyrolysis) | About 5 - 60 nm with very broad size distribution | (I) High production rate. | (1) Easy formation of large aggregates. |
| | | (2) Large-quantity synthesis. | |
| Precipitation from bulk solution | About 10-50nm with very broad size distribution | (1) Simple synthetic steps. | (1) Poor control over size and shape. |
| | | (2) Large quantity synthesis | (2) Poor colloidal stability. |
| | | | (3) Dissolution of magnetic nanoparticles |
| Precipitation in the presence of natural polymer or surfactant | About 5-30nm with very broad size distribution | (1) Simple synthetic steps. | (1) Poor control over size and shape. |
| | | (2) Large quantity synthesis. | (2) Leaching of magnetite nanoparticles |
| | | | (3) Dissolution of magnetic nanoparticles under acidic conditions |
| Microemulsion (hydrolytic approach) | About 4-20 nm with very broad size distribution | (1) Well control over size and particle shape. | (1) Requirement of large amount of surfactant. |
| | | | (2) Difficult to remove residue surfactant |
| | | | (3) Particles with poor crystallinity. |
| High temperature decomposition of organic precursors (nonhydrolytic approach) | About 2-20 nm with very broad size distribution | (1) Well control over size and particle shape. | (1) Use of toxic and air sensitive reagents. |
| | | (2) Particles with high crystallinity. | (2) Only for small quantity preparation. |
| | | | (3) Use of expensive reagents. |

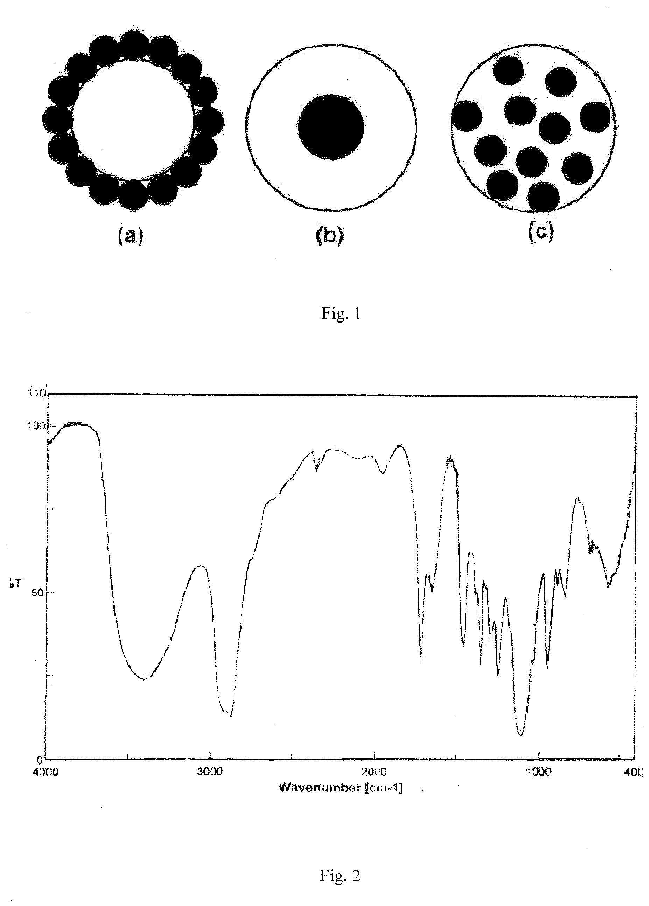

Nanoparticles with excellent bulk physical and chemical properties often do not possess suitable surface properties for specific applications. For this reason, surface-modification techniques that can transform these materials into valuable finished products are an important part of nanomaterials. Moreover, they allow for the manipulation of surface functions to meet diverse application requirements. Surface modification of nanomaterials with functional polymers is an important research area in polymer science owing to the wide applications. Magnetic polymer beads are composed of magnetic nano- or microparticles embedded in a polymer matrix. The size of beads can vary from hundred nanometers to few millimeters. The synthesis of magnetic polymer beads can be performed by three general ways. In the first one the magnetic particles are synthesized inside polymer matrix. In the second one polymer is synthesized in the presence of magnetic particles. In the third one the beads are prepared from preformed polymer and magnetic particles. The beads can have different structures (Figure 1). In one kind of beads the magnetic particles are homogeneously distributed in the volume of polymer matrix (Figure 1c). Other kinds of beads are characterized by core-shell structure (polymer core-magnetic shell (Figure la) or magnetic core-polymer shell (Figure 1b). Also, mixed systems are prepared, where the core-shell particles are homogeneously dispersed in polymer matrix (Philippova et al., Eur. Polym. J., 2011, 47, 542-559).

Further, methods for preparing magnetite are known from US 2,537,699, US 4,311,684, US 4,886,752, US 6,767 635 and EP 2 505 558. In the publication of Z. Xu et al. Nanoscale, 2010, 2, 1027-1032, the organic phase synthesis of monodisperse iron oxide nanocrystals from iron chloride as precursor by using sodium bromide as a reducing agent is disclosed.

The object of the present invention is to provide a method for preparing superparamagnetic nanoparticles, which are highly dispersive, in particular in oil, having improved hydrophobicity, feature strong magnetism in crude oil and having surface active properties. A further object of the invention is to provide a method for preparing respective nanoparticles at lowered temperatures in an easy way.

The object has been achieved by a method for preparing coated magnetite nanoparticles, comprising: a) providing a first aqueous solution comprising an Fc³⁺-salt; b) providing a second aqueous solution comprising an iodide salt; c) mixing the first solution and the second solution; d) hydrolyzing the mixture obtained in step c) at a temperature in a range from room temperature to 100°C by adjusting the pH to about 8.5-9 or above to obtain a precipitate; and e) separating the precipitate from the solution, wherein prior to, in and/or after at least one of the steps a) to e), a stabilizing agent is added. The stabilizing agent is a surfactant and/or a polymer. The term nanoparticles as used in the present invention relates to small objects having a diameter in a range from 0.1 to 1,000 nm, in particular from 1 to 100 nm. In the same way, objects having dimensions of a size being in a range that their properties are mainly determined by quantum mechanical effect instead of macroscopic effects shall be understood as nanoparticles.

It can particularly be preferred that in step a) of the inventive method only Fe³⁺-ions are comprised in the provided first aqueous solution. That is, the first aqueous solution preferably does not comprise iron species other than Fe³⁺, such as Fe²⁺ or Fe⁰.

In general, each Fe³⁺-salt which is soluble in water may be used to obtain the first aqueous solution. Preferably, the Fe³⁺-salt is selected from iron (III) sulfate, iron (III) sulfide, iron (III) chloride, iron (III) nitrate, iron (III) acetate, iron (III) phosphate, iron (III) bromide.

Most preferred, the Fe³⁺-salt is FeCl₃.

Even preferred, the iodide salt is an alkali iodide and/or alkaline earth iodide.

Particularly preferred, the iodide salt is potassium iodide (KI).

Mixing the first and the second solution in step c) of the inventive method can be carried out by any method for mixing well known in the art, for example stirring, shaking, etc. Preferably, the temperature in step d) is in a range from room temperature to 80°C, even preferred from room temperature to 70°C, more preferred from 30 to 80°C, particularly preferred from 40 to 70°C.

Room temperature in terms of the present invention shall be understood as a temperature from about 20 to 25°C, in particular 25°C.

It is well understood by those skilled in the art that pH adjustment in step d) includes adjustment to any pH suitable to allow hydrolyzing the mixture obtained in step c). Preferably, pH in step e) is adjusted to above 9.

Separating in step e) of the inventive method can be conducted by any method known in the art appropriate to separate the precipitate from the solution, for example filtrating, centrifugating, etc. Particularly preferred, separating is magnetic separating.

A stabilizing agent in terms of the present invention shall be understood as a compound or a mixture of compounds being able to stabilize nanoparticles, in particular by avoiding agglomeration of the nanoparticles by adsorption to the particles surface. Thus, stabilization may be attributed to formation of a passivating layer and/or to electrostatic repulsion.

Preferably, the stabilizing agent is a hydrophilic polymer.

In preferred embodiments, the surfactant is selected from saturated and unsaturated fatty acids preferably having a chain length from C 12 to C18, particularly preferred stearic acid and oleic acid, rosinoxyethylene ester (R-EG), ammonium rosinate, sodium oleate and sodium stearate.

In another preferred embodiment, the polymer is a hydrophilic polymer, preferably selected from polyvinylpyrrolidone) PVP), poly(2-acrylamido-2-methylpropane sulfonic acid) (p(AMPS)), or mixtures thereof. Preferably, the ratio of surfactant to polymer is from 10:1-0.1:1, more preferably 5:1-0.5:1, most preferred 3:1-1:1.

It is further preferred that iodine, formed in step c), is not removed before or in step d). Coated magnetite nanoparticles are obtained by the inventive method. The nanoparticles have a size from 5 to 50 nm, or from 10 to 30 nm, or of about 20 nm and/or feature narrow size distribution.

As used herein, a collection of particles has a narrow size distribution if more than about 50% of the mass of a collection of particles consists of particles having a diameter between about 70 to 150% of the base particle diameter. A collection of particles is also considered to have a narrow size distribution if more than about 80% of the mass of the collection consists of particles that have a diameter between about 70-250% of the base particle diameter. The nanoparticles can be used as oil spill cleaner.

As used herein, the term "oil spill cleaner" shall be understood as a substance or mixture of substances which can be used to remove an oil layer spread on water or aqueous solution. Removal is, in general, achieved by interaction of the oil spill cleaner and the oil layer on the water and formation of a mixture which is more easy to remove than the oil without the oil spill cleaner. Example for oil spill is oil released from, for example, tankers, offshore platforms, etc. into the ocean or coastal waters. The nanoparticles can be used as corrosion inhibitor. As used herein, the term corrosion inhibitor shall be understood as a chemical compound that decreases the corrosion rate of a material, typical of a metal or an alloy. The use as corrosion inhibitors is to prevent corrosion of carbon steel. The nanoparticles can be used in enhanced oil recovery.

Enhanced oil recovery in this regard is related to the general term for technique for increasing the amount of crude oil that can be extracted from an oil field. Enhanced oil recovery is also called improved oil recovery or tertiary recovery. By using enhanced oil recovery, 30 to 60% or more of a reservoirs original oil can be extracted. Enhanced oil recovery can be petroleum crude oil recovery.

In terms of particularly preferred embodiments, the present invention can be summarized as follows. The present work aims to prepare new magnetite coated materials using new method of preparation. This method bases on reaction of ferric chloride with potassium iodide in the presence of ammonioum hydroxide or sodium hydroxide aqueous solutions. Oleic acid, rosin salt and acrylamides are used as organic coatings to modify the magnetite surface. Magnetic separation technology was used to remove crude oil from sea water with coated magnetite powder and fluids. Modified magnetite exhibited higher removal efficiency for crude oil over sea water that contains more ions. The result from a water bath experiment, which was used to test the collection efficiency of magnetic particles from water, indicates that the recovery efficiency of magnetic particles is nearly 100%. This might be attributed to an electrostatic attraction between the magnetic particles with charged surface and polar compounds in the crude oil. The prepared magnetite materials show good wetting properties and reduce interfacial tension of crude oil which increases from its application in the field of enhanced oil recovery. On the other hand, the prepared materials show high corrosion inhibition efficiency in acidic water.

Surprisingly, it was found by the inventors that superparamagnetic coated magnetite nanoparticles can be prepared by the inventive method at low temperatures, the nanoparticles being highly dispersive, in particular in oil, having improved hydrophobicity, strong magnetism in crude oil, sizes of about 20 nm, and having surface active properties.

Further, it was found that magnetite nanoparticles with well defined size and narrow size distribution can be prepared this way.

The inventive method surprisingly allows to synthesize different classes of magnetite nanomaterials with core shell morphology using the inventive method to control morphology in particle size of the nanomaterials. Oil spill cleaning is achieved by mixing an oil spill on water and subsequent application of electromagnetic field.

It was further surprisingly found that the inventive method allows preparation of magnetite nanoparticles which requires only one iron compound as starting precursor, a limited number of additional chemical reagents, and allows a process which can be carried out under simple reaction conditions, preferably at room temperature, with easy work-up of the products obtained by which highly pure and superparamagnetic magnetite can be provided.

Additional features and advantages of the present invention will become apparent in the following detailed description on the basis of examples with reference to the drawings, wherein
Fig. 1 is a schematic representation of different structures of magnetic polymer beads: (a) polymer core-magnetic shell, (b) magnetic core-polymer shell, (c) magnetic particles homogeneously distributed in the polymer bead.
Fig. 2 is an IR spectrum of rosin ester (R-EG).
Fig. 3 is an IR spectrum of magnetite produced by method 1 using ammonia.
Fig. 4 is an IR spectrum of magnetite produced by method 2 using ammonia.
Fig. 5 is an IR spectrum of magnetite produced by method 1 using 2 M NaOH.
Fig. 6 shows TEM images of magnetite prepared by a) method 1 in the presence of 2 M NaOH, b) method 1 in the presence of ammonia, c) method 2 in the presence of 2 M NaOH, and d) method 2 in the presence of ammonia.
Fig. 7 is a XRD spectrum of magnetite nanoparticles prepared by method 2 in the presence of ammonia.
Fig. 8 shows DLS results of magnetite nanoparticles prepared by method 2 in the presence of ammonia.
Fig. 9 is a schematic illustration of different stabilized iron oxide surfaces.
Fig. 10 is a schematic illustration of PVP stabilized magnetite nanoparticles.
Fig. 11 is IR spectrum of magnetite coated with ammonium rosinate (method 3).
Fig. 12 shows a TEM image of magnetite coated with sodium oleate (method 5).
Fig. 13 is a schematic illustration of dispersion of magnetic fluid: a) organic based, formed a monolayer of oleic acid and b) aqueous based, formed a bilayer of oleic acid.
Fig. 14 is an IR spectrum of magnetite stabilized with oleic acid (method 4).
Fig. 15 is a TEM image of magnetite coated with oleic acid (method 4).
Fig. 16 is a TEM image of magnetite coated with stearic acid (method 4).
Fig. 17 is a TEM image of magnetite coated with oleic acid (method 6).
Fig. 18 shows X-ray diffraction (XRD) pattern of oleic acid coated Fe₃O₄/p(AMPS) core shell magnetic nanogel (method 7).
Fig. 19 shows DLS data of coated Fe₃O₄/p(AMPS) core shell magnetite nanogel (method 7) at pH=7.
Fig. 20 shows zeta potential of oleic acid coated Fe₃O₄/p(AMPS) core shell magnetic nanogel at pH=7.
Fig. 21 shows a TEM image of oleic acid coated Fe₃O₄/p(AMPS) core shell magnetic nanogel.
Fig. 22 shows an optical photo of crude oil water emulsion containing oleic acid coated Fe₃O₄/p(AMPS) core shell magnetic nanogel.
Fig. 23 illustrates the effect of magnetic field on crude oil drop containing oleic acid coated Fe₃O₄/p(AMPS) core shell magnetic nanogel using drop shape analyzer.
Fig. 24 shows polarization curves of carbon steel recorded in 1 M HCl containing different concentrations of oleic acid coated Fe₃O₄/p(AMPS) core shell magnetic nanogel inhibitor at 25°C.

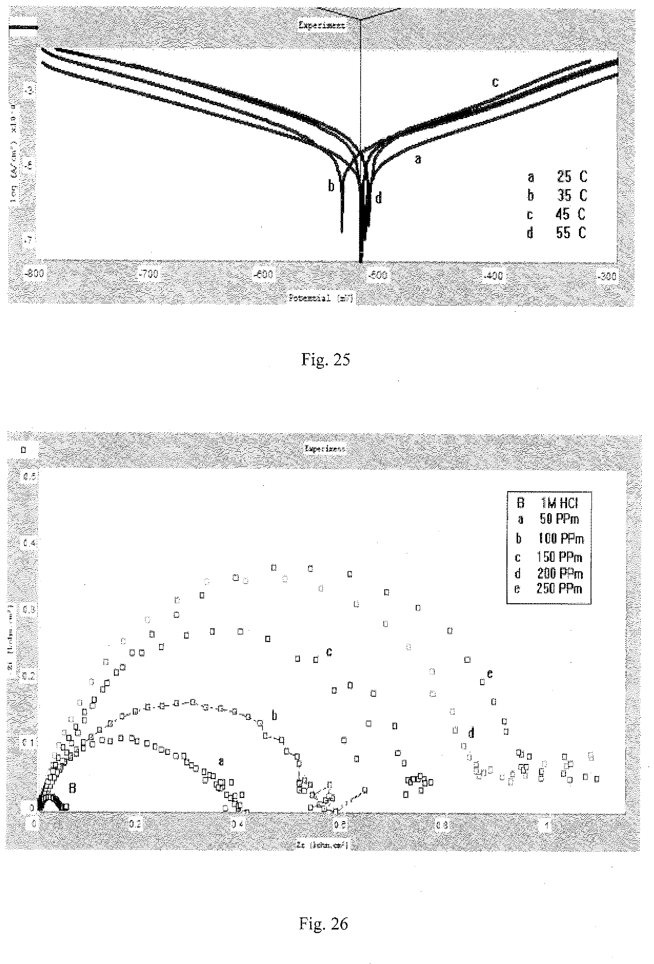

Fig. 25 shows the effect of temperature on the cathodic and anodic responses for carbon steel in 1 M HCl at 250 ppm of oleic acid coated Fe₃O₄/p(AMPS) core shell magnetic nanogel inhibitors.
Fig. 26 shows Nyquist plots for carbon steel immersed in 1M HCl solution in the absence and presence of various concentrations of oleic acid coated Fe₃O₄/p(AMPS) core shell magnetic nanogel inhibitor.
Fig. 27 illustrates the effect of magnetic field on contact angle of crude oil containing oleic coated Fe₃O₄/p(AMPS) core shell magnetic nanogel a) without magnet, b) vertical magnetic field and c) horizontal magnetic field.

### Experimental

### 1) Materials:

Anhydrous ferric chloride, potassium iodide, ammonium hydroxide (25%) aqueous solution and sodium hydroxide used as reagent for preparation of magnetite. Oleic acid, stearic acid and sodium oleate and poly(vinyl pyrrolidone) (PVP) having molecular weights of 40,000 g/mol were used as organic coatings for magnetite. 2-Acrylamido-2-methylpropane sulfonic acid (AMPS), N,Nmethylene bisacrylamide (MBA) was used to prepare crosslinked polymer. Rosin (colophony) is a commerical natural product extracted from pine tree. The physical properties of rosin included melting temperature and acid number are 161°C and 183 mg KOH/g.

### 2) Preparation of surfactants based on Rosin

### a) Rosin ester

Rosin. (N grade, 30 g) was placed in a glass reactor and mixed with 0.11 mol of ethylene glycol or polyethylene glycol having molecular weight ranged from 200 to 600 g/mol. Zinc dust (0.5%) was added as catalyst. The mixture was heated to 180-260°C till the completion of reaction and separating of 1.8 ml of water was separated. The reaction yield was ranged from 70 to 85%. The structures of the produced surfactants were confirmed by using infra red (IR) spectroscopy. A representative infrared spectral patterns of rosin ethylene glycol ester (R-EG) is represented in *Figure 2**.* The stretching bands at 1745 cm⁻¹ for carbonyl (C=O) of ester and the peak at 3450 cm⁻¹ for OH are observed in all spectra. The chemical structure of the R-EG is respresented in structure 1.

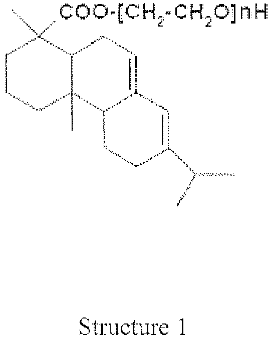

### b) Ammonium rosinate

Rosin (30 g) was heated with 200 ml of ammonium solution (20-30 %) at temperature ranging from 40 - 90°C until rosin soubise in ammonia solution. The product was separated after removing of 70% volume of ammonia under pressure using rotary evaporator at 40-60°C. The reaction yield of ammonium rosinate was (80%). The chemical structure of the R-EG is respresented in structure 2.

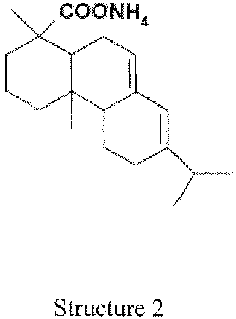

### 3) Preparation of magnetite

Superparamagnetic magnetite Fe₃O₄ nanoparticles were prepared by different modified methods according to the following chemical equation (1):

**3Fe³⁺-I⁻ -→2Fe³⁺+ Fe²⁺+ 1/2I⁻** **(1)**

### Method 1

Aqueous solution of ferric chloride was prepared by dissolving of 40 g (0.24 mol) of anhydrous FeCl₃ in 300 ml of distilled water to prepare an aqueous solution A. Further, 13.2 g (0.08 mol) of potassium iodide is dissolved in 50 ml of distilled water to prepare an aqueous solution B. The aqueous solutions A and B are then mixed together at room temperature and stirred and allowed to reach equilibrium for one hour while bubbling with pure N₂ to keep oxygen free throughout the preparation procedure. A precipitate is filtered out, washed with distilled water, dried at vacuum at 30°C and weighed to determine the reaction yield (10.1 g, i.e. 86.7% yield). The filterate (including washings) was then heated to temperature ranged from 40 to 70°C, and hydrolyzed using 200 ml of 25% ammonia solution or 2 M aqueous sodium hydroxide which was added dropwise with stirring while bubbling with pure N₂ to keep oxygen free throughout the preparation procedure. Mixing was continued until complete precipitation of black magnetite is achieved. The reaction was continued at the reaction temperature with stirring for 4 hrs. The precipitate was then left to settle, filtered, washed with distilled water, dried at vacuum at 30°C (the precipitate should dry without heating) and weighed. The percentage yield of reaction in the presence of NaOH and ammonia solution were 90.9 and 95.5 %, respectively.

### Method 2

The procedure for preparation of magnetite was repeated following Method 1 in one step without removing of precipitate of iodide while bubbling with pure N₂ to keep oxygen free throughout the preparation procedure and the magnetite reaction precipitates collected and washed several times with ethanol and with distilled water to remove unreacted materials of iodine. The black precipitate was separated by a magnet and washed several times with distilled water to remove the NaCl, NH₄Cl and other salts from the solvent. The percentage yield of reaction in the presence of NaOH and ammonia solution were 82.1 and 90.1%, respectively.

### 4) Preparation of organic modified magnetite

The magnetite was hydrophobically modified in the presence of saturated and saturated fatty acids having different carbon chain lengths ranged from C12 to C18 example of stearic and oleic acids. Magnetite was stabilized by low molecular weight surfactants such as rosin oxy ethylene esters (R-EG), ammonium rosinate, sodium oleate and sodium stearate. On the other hand, magnetite was modified with hydrophilic polymers such as poly(vinyl pyrrolidone), PVP, ad crosslinked microgel such as poly (2-acrylamido-2-methylpropane sulfonic acid), p(AMPS) in the presence of oleic acid. The modification of magnetite was obtained through two different methods. The first is based on modification during formation of iron ions and the second is based on modification after formation of iron ions.

### Modification during preparation of iron ions:

### a) Synthesis of hydrophilic Fe₃O₄ Nanoparticles:

### Method 3

40 g of anhydrous FeCl₃ was added to 300 ml of distilled water containing (1-3g) of PVP to prepare an aqueous solution A. Further, 13.2 g (0.08 mol) of potassium iodide was dissolved in 50 ml of distilled water to prepare an aqueous solution B. The aqueous solutions A and B were then mixed together at room temperature, stirred and allowed to reach equilibrium for one hour while bubbling with pure N₂ to keep oxygen free throughout the preparation procedure. A precipitate was filtered out, washed with distilled water, dried at vacuum at 30°C and weighed to determine the reaction yield (99% yield). The filterate (including washings) was then heated to a temperature ranging from 40 to 70°C, and hydrolyzed using 200 ml of 25% ammonia solution or 2 M aqueous sodium hydroxide which is added dropwise with stirring while bubbling with pure N₂ to keep oxygen free throughout the preparation procedure. Mixing was continued until complete precipitation of black magnetite was achieved. The reaction was continued at the reaction temperature with stirring for 4 hrs. To this, saturated NaCl solution was added to coagulate the PVP nanoparticles. The precipitate was then left to settle, filtered, washed with distilled water, dried at vacuum at 30°C (the precipitate was dried without heating) and weighed. The percentage yield of reaction in the presence of NaOH and ammonia solution was 70.9 and 80.5 %, respectively.

The same procedure was repeated but R-EG or ammonium rosinate or sodium oleate or sodium stearate were added instead of PVP.

### b) Synthesis of aqueous hydrophobic coated Fe₃O₄ nanoparticles.

Oleic acid stabilized Fe₃O₄ nanoparticles can be prepared by two methods:

### Method 4:

40 g of anhydrous FeCl₃ were dissolved in 300 ml of distilled water containing (1- 3 g) of PVP to prepare an aqueous solution A. Further, 13.2 g (0.08 mol) of potassium iodide was dissolved in 50 ml of distilled water to prepare an aqueous solution B. The aqueous solutions A and B are then mixed together at room temperature and stirred and allowed to reach equilibrium for one hour while bubbling with pure N₂ to keep oxygen free throughout the preparation procedure. 3 ml of oleic acid in 100 ml of ethanol was added after heating the reaction mixture to a temperature ranging from 40-70°C under vigorous stirring. 200 ml of NH₄OH (25%) or 2 M NaOH was added dropwise to the above solution. After that, the reaction mixture was stirred for another 0.5 h at 40 -70°C. Finally, oleic acid-stabilized Fe₃O₄ nanoparticles were separated from the mixture by ultracentrifugation and washed with water three times and with ethanol two times.

Stearic acid coated magnetite nanoparticle was prepared by the same method, but with using stearic acid instead of oleic acid.

### Modification after preparation of iron ions:

### Method 5: Preparation of hydropohilic magnetite

The procedure for preparation of magnetite was repeated and PVP was added after formation of iron ions:
40 g of anhydrous FeCl₃ was dissolved in 300 ml of distilled water to prepare an aqueous solution A. Further, 13.2 g (0.08 mol) of potassium iodide was dissolved in 50 ml of distilled water to prepare an aqueous solution B. The aqueous solutions A and B were then mixed together at room temperature and stirred and allowed to reach equilibrium for one hour while bubbling with pure N₂ to keep oxygen free throughout the preparation procedure. A precipitate is filtered out, washed with distilled water, dried at vacuum at 30°C and weighed to determine the reaction yield (95% yield). The filtrate (including washings) was then heated to temperature ranging from 40 to 70°C, and hydrolyzed using 200 ml of 25% ammonia solution or 2 M aqueous sodium hydroxide containing (1-3 g) of PVP which was added dropwise with stirring while bubbling with pure N₂ to keep oxygen free throughout the preparation procedure. Mixing was continued until complete precipitation of black magnetite was achieved. The reaction was continued at the reaction temperature with stirring for 4 hrs. To this, saturated NaCl solution was added to coagulate the PVP nanoparticles. The precipitate was then left to settle, filtered, washed with distilled water, dried at vacuum at 30°C (the precipitate was dried without heating) and weighed. The percentage yield of reaction in the presence of NaOH and ammonia solution were 95.9 and 99.5 %, respectively.

The same procedure was repeated but R-EG or ammonium rosinate or sodium oleate or sodium stearate were added instead of PVP.

### Method 6: Preparation of hydrophobic magnetite

To prepare the single-layer oleic-acid-coated Fe₃O₄ nanoparticles
40 g of anhydrous FeCl₃ was dissolved in 300 ml of distilled water to prepare an aqueous solution A. Further, 13.2 g (0.08 mol) of potassium iodide was dissolved in 50 ml of distilled water to prepare an aqueous solution B. The aqueous solutions A and B were then mixed together at room temperature, stirred and allowed to reach equilibrium for one hour while bubbling with pure N₂ to keep oxygen free throughout the preparation procedure. A precipitate was filtered out, washed with distilled water, dried at vacuum at 30°C and weighed to determine the reaction yield (95% yield). A solution of 0.1 ml oleic acid in 5 ml acetone is added to the heated salt solution before the addition of NH₄OH solutions (200 ml containing 2 g of oleic acid). A black suspension was formed upon the addition of NH₄OH and the suspension heated to 90°C for 30 min. After cooling the mixture to ambient temperature, the suspended magnetite was flocculated by addition of acetone (200 ml). After separation of the magnetite using a magnet and decanting the mixed solvent, the solid was washed with warm ethanol and acetone.

Stearic acid coated magnetite nanoparticles were prepared by the same method, but with using stearic acid instead of oleic acid.

### Method 7: Oleic modified Fe₃O₄/p(AMPS) core shell magnetic nanogel

A series of core shell oleic acid/Fe₃O₄/p(AMPS) magnetic nanogels were repared by solution polymerization.

40 g of anhydrous FeCl₃ was dissolved in 300 ml of distilled water to prepare an aqueous solution A. Further, 13.2 g (0.08 mol) of potassium iodide was dissolved in 50 ml of distilled water to prepare an aqueous solution B. The aqueous solutions A and B were then mixed together at room temperature and stirred and allowed to reach equilibrium for one hour while bubbling with pure N₂ to keep oxygen free throughout the preparation procedure. A precipitate was filtered out, washed with distilled water, dried at vacuum at 30°C and weighed to determine the reaction yield (95% yield). 2 g AMPS, 0.06 g MBA (3 mol % with respect to total monomer amount) and 0.01 g of potassium persulfate were dissolved in the filtrate (including washings) under nitrogen atmosphere and then heated, wherein temperature ranged from 40 to 70°C for 2 hrs. 200 ml of 25% ammonia solution or 2 M aqueous sodium hydroxide containing (1-3 g of oleic acid) was added dropwise with stirring while bubbling with pure N₂ to keep oxygen free throughout the preparation procedure. A black suspension was formed upon the addition of NH₄OH and the suspension heated to 90°C for 30 min. After cooling the mixture to ambient temperature, the suspended magnetite was flocculated by addition of acetone (200 ml). After separation of the magnetite using a magnet and decanting the mixed solvent, the solid was washed with warm ethanol and acetone.

Stearic acid coated magnetite nanoparticles were prepared by the same method, but with using stearic acid instead of oleic acid.

### 5) Results

### Chemical structure, morphology and composition of Fe₃O₄ nanoparticles

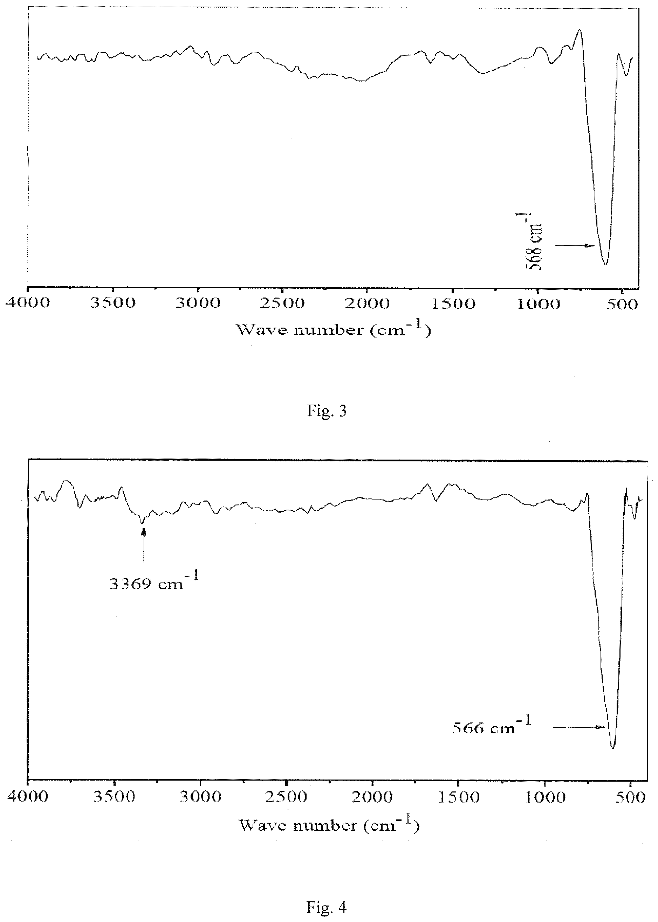

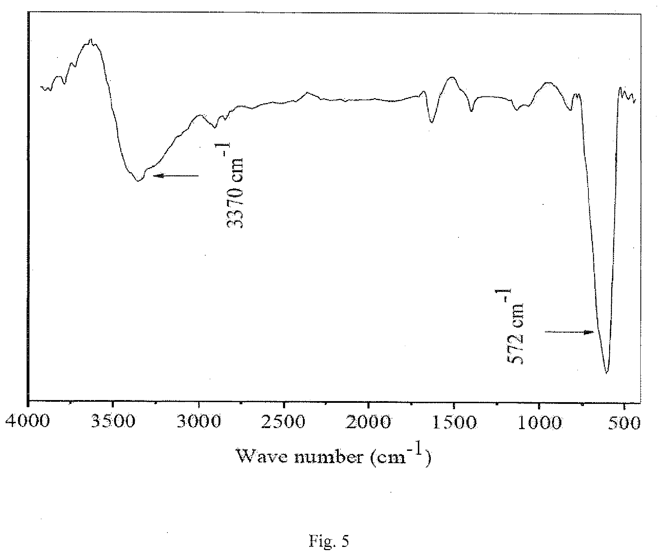

FTIR spectra of Fe₃O₄ nanoparticles prepared by method 1 and 2 are shown in figures 3-5. The IR spectra of all samples clearly reveal the presence of strong IR absorption bands at between 400 and 630 cm⁴, which are the characteristic absorption peaks of Fe-O vibration related to Fe₃O₄.

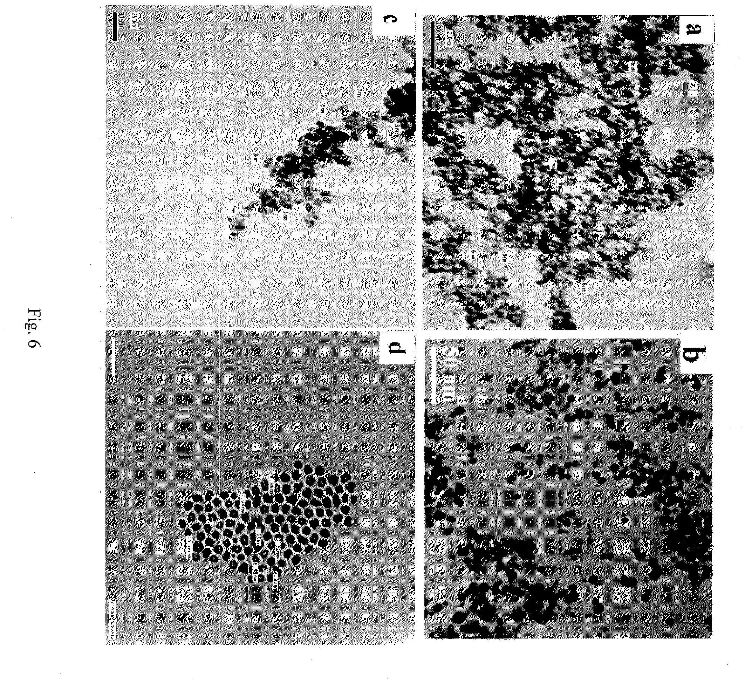

Transmission electron microscopy was used to measure the morphology and particle size of magnetic nanoparticles. Figure 6 illustrates the morpholgy of magnetite prepared through method 1 and 2 in the presence of ammonia and NaOH solution. Magnetite produced from method 1 in the presence of 2 M NaOH suffer from serious aggregation specially when subjected to magnetic field (figure 6a). Furthermore, greatest number of particles has distorted morphology. This is because of the rate of precipitation is too small so the initially formed Fe₃O₄ nanoparticles serve as nuclei to assist growth of large particles. Also, magnetic field affects the orientation of magnetic dipoles and help in coagulation, so it is difficult to redisperse the magnetite nanoparticles after collection using magnetic fields.

Magnetite nanoparticle prepared by method 2 addition of ammonia to iron ion solutions to has more distinct morphology with less aggregation (figure 6d). This might be attributed to rate of particle growth and precipitation is very high so there is no chance for small molecules to join together to form large particles. Moreover, it was reported that magnetite nanoparticles prepared by method 2 have quite a number of hydroxyl groups on the surface of precipitates from contacting with the aqueous phase. The negative charges on hydroxyl group offer some stability to the prepared nanoparticles during the ageing period and delay the aggregation process. However, inefficient stirring is unable to disintegrate the large particles formed during preparation process, so some aggregation could be observed. TEM of this method reveals formation of monodisperse Fe₃O₄ nanoparticles that have a narrow particle size distribution with the mean size of 6 nm. All particles have well defined morphology with cubic structure. These results indicate that, method 2 is the best method to be used for preparation of Fe₃O₄ nanoparticles in the presence of ammonia.

### X-ray diffraction patterns

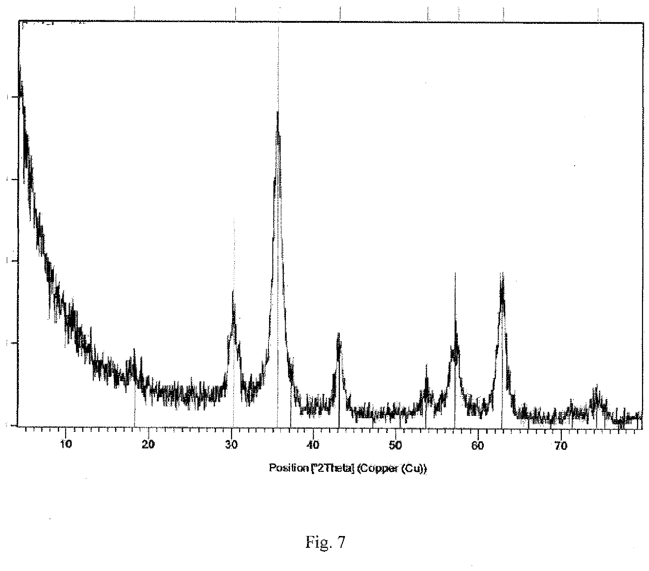

There are many different natural structures of iron oxide, such as Fe₃O₄, α-Fe₂O₃, γFe₂O₃, Fe₂O₃, and β-FeOOH, all of which exhibit magnetic properties. The nature of the prepared Fe₃O₄ particles was determined by XRD. X-ray diffraction patterns of the magnetite nanoparticles (Figure 7) revealed diffraction peaks at (1 1 0), (2 2 0), (3 1 1), (4 0 0), (4 2 2), and (5 1 1), which are the characteristic peaks of the Fe₃O₄ crystal with a cubic spinel structure. Herein, no peaks were detected which could be assigned to impurities such as γ- or α-ferric oxide. X-ray diffraction data of iron oxide nanoparticles are listed in table 2. It is noticed that the diffraction data is closer to Fe₃O₄ than to γ-Fe₂O₃.

**Table 2: Standard XRD data (for 2θ = 20-80°) for Fe₃O₄, γ-Fe₂O₃ and the experimental XRD data of Fₑ₃O₄ nanoparticles.**

| Standard Diffraction Data | | | | Experimental Data of Fe₃O₄ | |
|---|---|---|---|---|---|
| Fe₃O₄ | | γ-Fe₂O₃ | | | |
| 2θ | I | 2θ | I | 2θ | I |
| 30.1 | 30 | 30.28 | 30 | 29.99 | 20.35 |
| 35.43 | 100 | 35.69 | 100 | 35.51 | 100 |
| 43.06 | 20 | 43.35 | 15 | 43.23 | 20.1 |
| 53.41 | 10 | 53.87 | 9 | 53.59 | 2.21 |
| 56.96 | 30 | 57.42 | 20 | 57.12 | 31.29 |
| 62.53 | 40 | 63.03 | 40 | 62.81 | 55.47 |
| 73.97 | 10 | 74.56 | 8 | 74.27 | 2.21 |

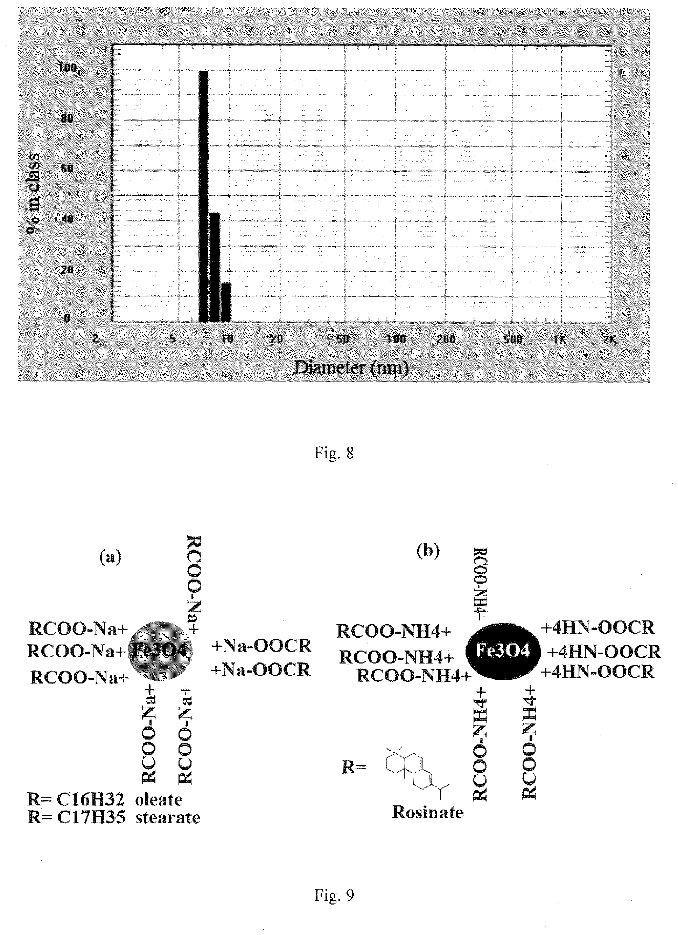

The hydrodynamic diameter of Fe₃O₄ prepared by method 1 and 2 were measured by dynamic light scattering (DLS). DLS measurements yield a hydrodynamic average size of 53 and 8 nm for Fe₃O₄ prepared by method 1 and 2 in the of ammonia, respectively. The data represented in figure 8.

### Chemical structure, morphology and composition of organic modified Fe₃O₄ nanoparticles

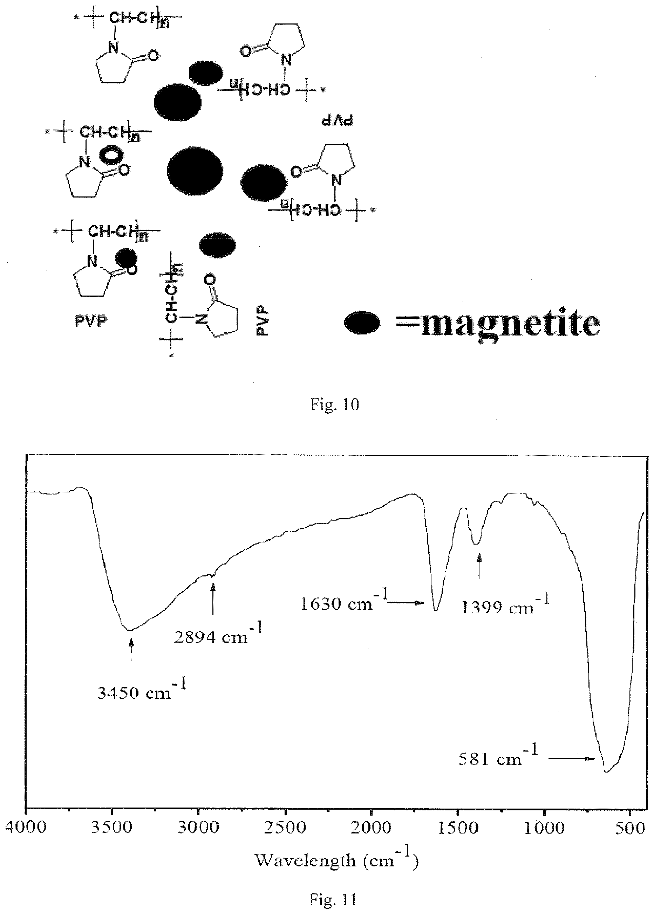

Stabilization of preformed iron oxide nanoparticles can be achieved via either electrostatic or steric stabilization. It is known that carboxylates, phosphates, and sulphates readily adhere to iron oxide surfaces in a specific substrate manner, as shown in figure 9. The nanoparticles with negative surface charges have been prepared by adhering the substances such as sodium oleate, sodium stearate or ammonium rosinate. On the other hand, magnetite particles can by stabilized using PVP b as illustrated in the figure 10 used on steric stabilzation mechanism.

The presence of ammonium rosinate coating on the magnetite nanoparticle surface prepared by method 3 was identified using FT-IR spectroscopy (Figure 11). The IR spectrum of the α-Fe₂O₃ nanoparticles clearly reveals a large and intense band at 3450 cm⁻¹ that could be assigned to the structural OH groups as well as to the traces of molecular water and rosinate carboxylate. ii) The 1700 cm⁻¹ peak assignable to the C=O vibration (symmetric stretching) from the COOH group rosin acid shifts to an intense band at about 1630 cm⁻¹ for the ferromagnetic phase coated with rosinate revealing the binding of a rosinate to the magnetite surface; iii) the neighbor band at 1399 cm⁻¹ to the asymmetric stretchings of CO from the COOH group can be assigned, the high-intensity bands between 400 and 600 cm⁻¹ can be associated with the stretching and torsional vibration modes of the magnetite.

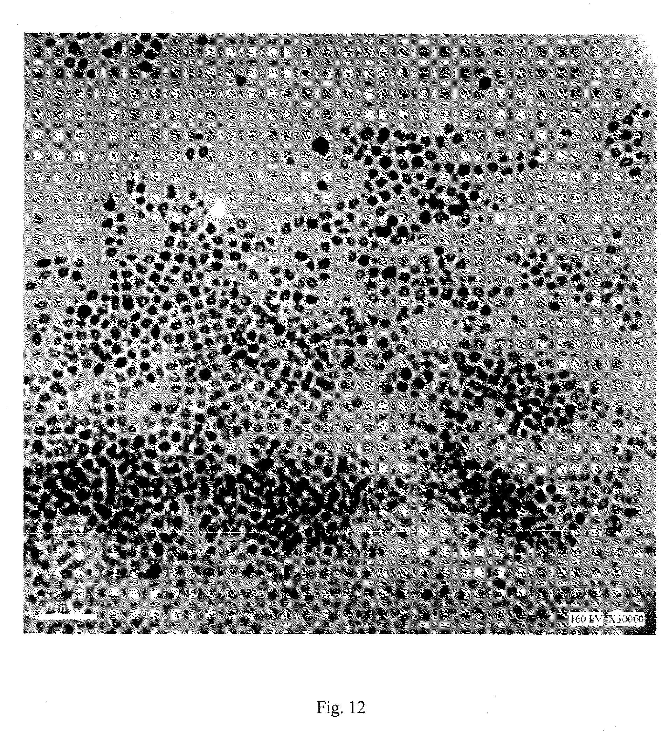

Figure 12 shows transmission electron microscope (TEM) image of sodium oleate coated magnetite nanoparticles. It could be clearly seen that the particles has a good distribution with lower percentage of agglomeration and the particle size estimated to be 12 nm. The colloidal stability increased with respect to bar Fe₃O₄ nanoparticles due to repulsion between negative charges of oleic acid.

### Characterization of aqueous based oleic acid coated Fe₃O₄ nanoparticles.

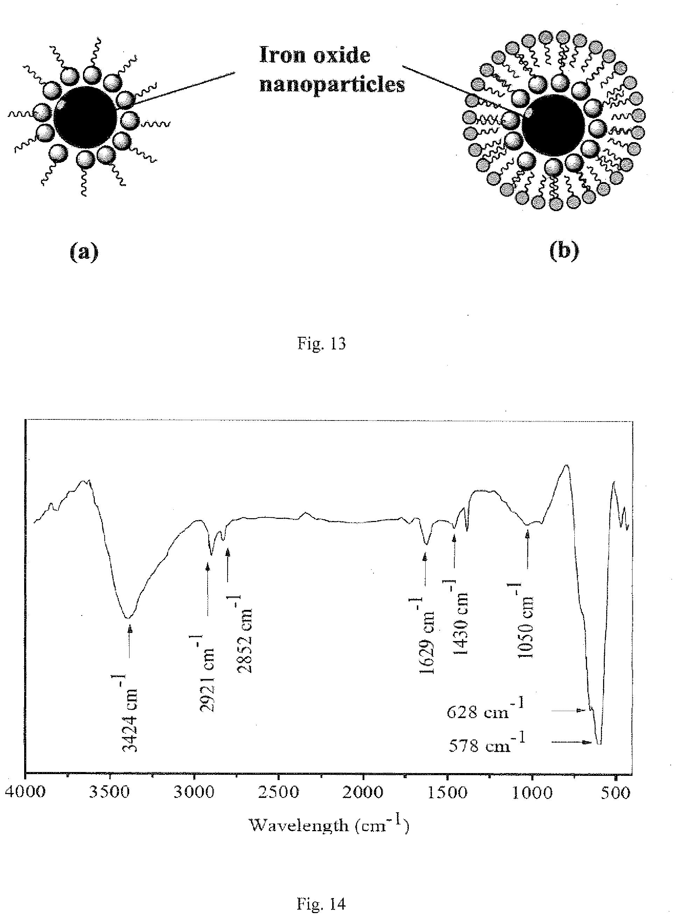

Oleic acid (CH₃(CH₂)₇CH=CH(CH₂)₇COOH) was used to prevent agglomeration during particle synthesis by forming a dense protecting monolayer on the particle surface where the cis double bond provides a kink necessary for such a small molecule to provide effective stabilization. Addition of parent fatty acids, in unionized form, to an ammonical Fe₃O₄ suspension gave instant fluids, whereas when the ammonium salt of the fatty acid was added to neutral suspensions of Fe₃O₄, instant dispersion failed to occur. The charge-stabilized particles first formed by preparation from basic solution, will have surface bound OH ions, which react with the acid but not the anion to leave the carboxylate group bound to the particle surface. If concentration of oleic acid exceeds the critical micelle concentration, micelle formation will occur. This will reduce the amount of oleic acid available for particles stabilization. Attempts were made to prevent micelle formation by adding oleic acid in portions. Stabilization of magnetite nanoparticles with oleic acid at high pH is attributed to absorption of hydroxide ions at the particle surface and subsequent charge stabilization of the magnetic particles. It is envisaged that at high pH, OH-ions are absorbed onto that part of the surface of the particle not occupied by surfactant groups. Another major problem is how to maintain Fe₃O₄ nanoparticles in a dispersed state during addition of oleic acid. Steric stabilization of iron oxide nanoparticles is achieved by adsorption of amphoretic surfactants on the nanoparticle surface. Assembling a monolayer of these amphoretic surfactant molecules on the nanoparticle surface produces oil-based magnetic fluid (Figure 13). The aqueous-based magnetic fluid is produced by assemblies of bilayers of surfactant molecules (Figure 13b).

FTIR spectrum of a representative oleic acid coated Fe₃O₄ nanoparticles is shown in figure 14. FTIR spectra of the nanoparticles show bands at 2922 and 2852 cm⁻¹ which were attributed to shifted bands of the asymmetric and symmetric CH₂ stretch. This shift was caused by the field of the solid surface and it is an indication that the hydrocarbon chains that surround the particle were in a closed-packed, crystalline state. Bands characteristic of asymmetric and symmetric COO⁻ stretch were present (1430 and 1629 cm⁻¹) as was a band at 1050 cm⁻¹ characteristic of CO single bond which demonstrates that oleic acid was chemisorbed onto the nanoparticles as a carboxylate. Fe-O stretching of magnetite was also observed at 578 and 628 cm⁻¹. The strong band at 3424 cm⁻¹ attributed to the symmetric O-H stretching vibration of hydroxyl groups that are absorbed onto that part of the surface of the particle not occupied by surfactant groups as well as v(O-H) for H-bonded OH groups (from oleic acid).

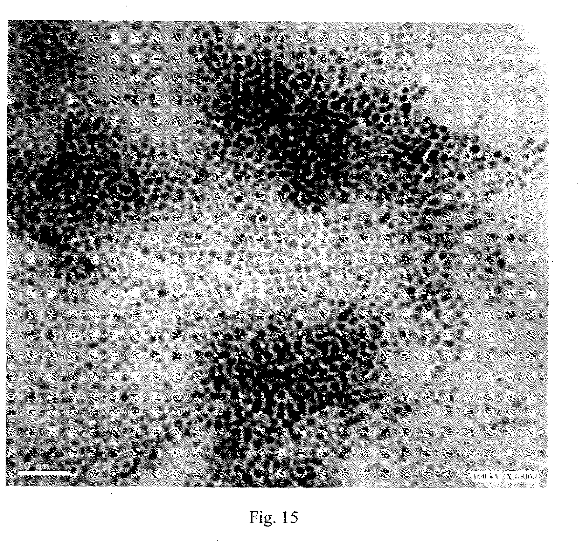

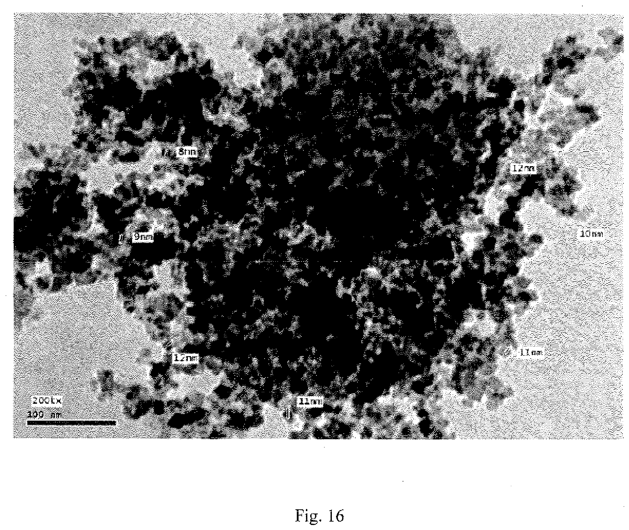

TEM of oleic acid coated Fe₃O₄ nanoparticles prepared by the method 4 is shown in figure 15. It is clearly observed that, agglomeration of nanoparticles occur to some extent. Whatever, the colloidal stability of magnetite nanoparticles increases due to successful stabilization of Fe₃O₄ nanoparticles. The repulsion between π electrons of double bond of oleic acid prevents full aggregation of nanoparticles. The average particle size is 13 nm and the particles have spherical morphology. Figure 16 shows the TEM micrograph of stearic acid coated Fe₃O₄ nanoparticles. The micrograph shows the presence of some aggregations in contrast to the image obtained using oleic acid. This behavior mainly attributed to absence of double bond in the hydrocarbon chain of stearic acid, the presence of double bond enhances stabilization of nanoparticles by preventing the aggregation process among the hydrocarbon chains as a result of repulsive forces between π-electrons of double bonds. To sum up, stearic acid failed to stabilize Fe₃O₄ nanoparticles.

All oleic acid coated magnetite nanoparticles suffer from some aggregation in aqueous media because it is difficult to make complete dispersion after complete precipitation using organic coating. Also, all nanoparticles have wide size distribution.

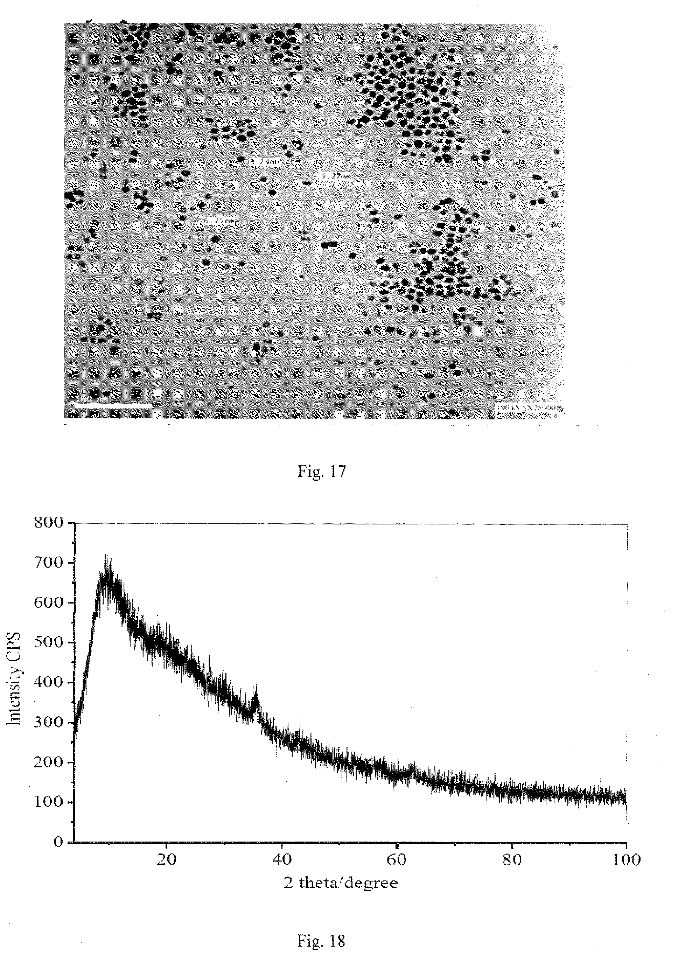

During synthesis, the oleic acid binds so tightly to the particle surface that it impedes particle growth. Method 6 completed without removing of iodine precipitate to produce a tight ligand shell which protects the particles from aggregation and oxidation but permits growth. TEM of oleic acid coated Fe₃O₄ nanoparticles is shown in figure 17. The image reveals formation of monodispersed nanoparticles with average size of 6 nm confirming that the organic route is an effective method for the preparation of monodisperse magnetic nanoparticles. The particle size distributions appear to be quite narrow and the particle shape is reasonably spherical.

Synthesis of oleic coated Fe₃O₄/p(AMPS) core shell nanoparticles occur by in situ free radical polymerization of AMPS in the presence of MBA as a crosslinker and KPS as initiator as described in the method 7. The key factors for successful preparation of these nanoparticles are:
- pH of a mixture of (AMPS and MBA) is adjusted to be similar to the pH required for dispersion of magnetite nanoparticles (pH 8-9) by addition of NaOH.
- High concentration of MBA decreases the particle size and gives excellent colloidal stability because it hinders the chain growth.
- The concentration of KPS is a relevant factor. At high KPS concentration, number of radicals generated in the reaction vessel will be high and they will initiate more than one monomer in the same time, leading to greater number of growing chains so the molecular weight and chain length decrease and hence the particle size decrease. Too high concentration makes it difficult to obtain core shell structure as well as difficulty in precipitation of the oligomers during purification process. Also, high concentration of KPS will increase the ionic strength leading to precipitation of magnetite nanoparticles. On contrast, low concentration of KPS lead to formation of large particle size due to increasing the molecular weight of polymer during propagation process.

X-ray diffraction (XRD) patterns of oleic coated Fe₃O₄/p(AMPS) magnetic nanogel (method 7) are shown in Figure 18. There are three strong broad peaks at 2 theta of 8.77, 9.40, 10.30 which can be attributed to the amorphous nature of the hydrogel. Also, the intensity of characteristic peaks of magnetite is weakened indicating formation of core-shell structure.

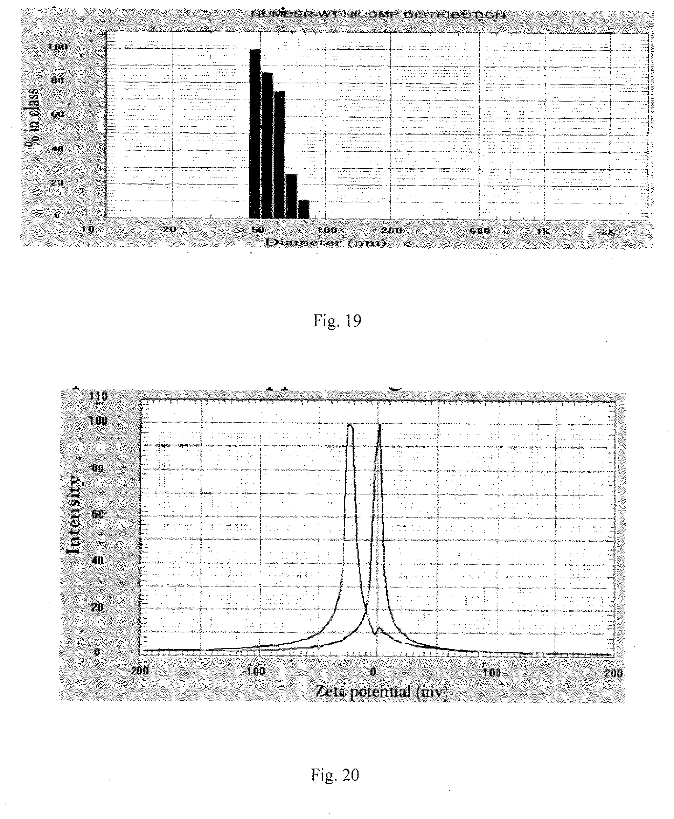

Dynamic light scattering of sample oleic coated Fe₃O₄/p(AMPS) as a representative sample is shown in figure 19. The figure reveals that the average sample diameter is 53 nm and the particles have a wide size distribution.

Zeta potential is used to get information about the surface charge density of magnetic nanogel and hence investigation of colloidal stability of nanoparticles. Zeta potential of sample oleic coated Fe₃O₄/p(AMPS) as a representative sample is shown in figure 20. It could be clearly seen that, the average frequency shift, average mobility and zeta potential increase from -4.04 Hz, -0.79 M.U. and -10.63 mV for bar magnetite nanoparticles to -22.46 Hz, -4.4 M.U. and - 59.12 mV, respectively, for magnetic nanogel. This shift in zeta potential to more negative values attributed to the negative charge of sodium sulfate. The magnetic nanogel has excellent colloidal stability due to the repulsive forces among nanoparticles which hindered the particles from approaching each other.

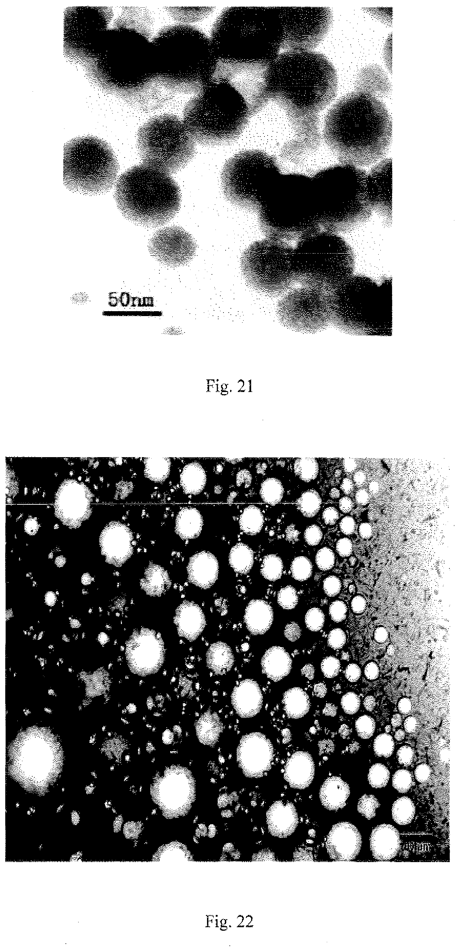

TEM image of oleic coated Fe₃O₄/p(AMPS) was illustrated in Figure 21. The TEM images clearly reveal that, the nanoparticles are well-shaped spheres with smooth surfaces, with the Fe₃O₄ visible as dark spots inside the magnetic polymer particles. From the figure, it is noticed that all particles have approximately the same size.

### 6) Applications

### 6.1) Magnetic properties

Magnetic nanogels are nanometer scale particles of inorganic/polymer core-shell. Magnetic nanogels of common interest are ferromagnetic magnetite (Fe₃O₄) coated with cross-linked polymer nanogel. The Fe₃O₄-core, which possesses strong magnetic property and superparamagnetic behavior, is of relatively low toxicity to the human body when encapsulated in the protective polymer shell, which is crosslinked polymer hydrogels. The shell prevents the Fe₃O₄ core from oxidation and aggregation. The magnetite powder and dispersion in hexane show good magnetic properties.

### 6.2) Application of magnetite as oil spill cleaner

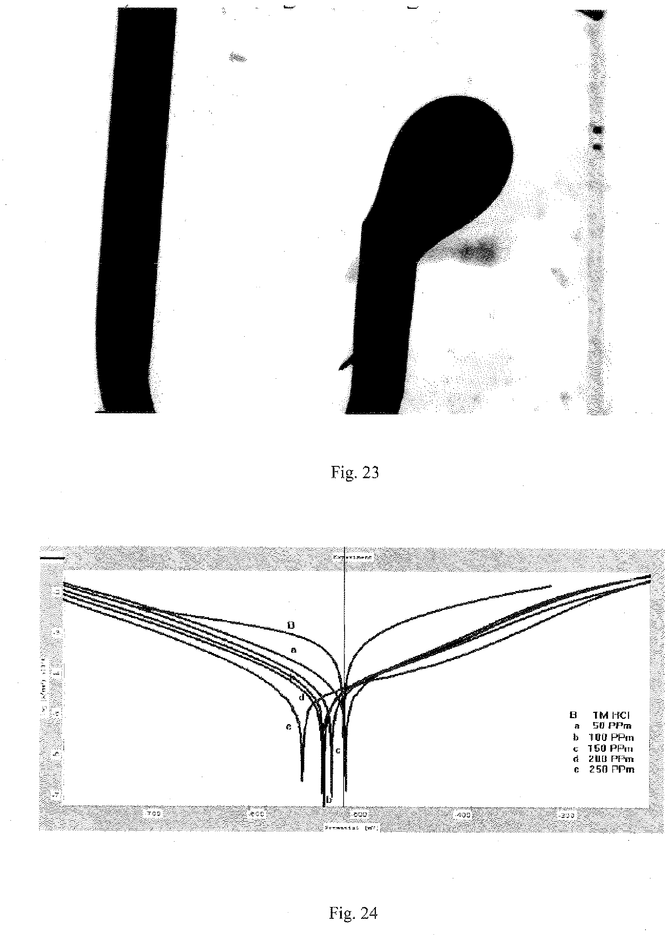

The water bath experiment is depicted by Chun et al., Journal of Environmental Engineering, 2001, 127(5). The crude oil was (1 ml) spread over 250 ml of sea water. The magnetite powder was spread over either heavy or light Arabian crude oil [Ras Tanora wells, Aramco, Saudi Arabia]. After 5 min, the magnetic particles bound with the surfactant were recovered with a permanent magnet of 25 mm diameter and 10 mm thickness, made with Nd-Fe-B (0.43 T (4300 Gauss)). The ratios between magnetite powders and crude oil were changed from 1:1, 1:5, 1:10 to study the effect of magnetite contents on the oil recovery. The data of oil recovery efficiency correlated to magnetite oil ratio (MOR) and listed in Table 3. The data of interfacial tension between recovered crude oil, which contain the magnetite, and sea water were determined at 30°C by drop shape analyzer 100 (DSA-100, Kruss, Germany) and listed in Table 3. The data indicated that oleic coated Fe₃O₄/p(AMPS) core shell magnetic nanogel shows the good oil recovery of oil without magnetite precipitation in water at MOR 1:10. The data indicated that IFT of crude oil reduced from 35.5 to 4.6 mN/m. The data indicated that oleic coated Fe₃O₄/p(AMPS) prepared by method 7 formed stable emulsion with crude oil as indicated from optical microscope photo as represented in figure 22. Figure 23 shows the effect of magnete on drop of oil durig interfacial tension measurements.

**Table(3): IFT, Screen Test for the modified magnetite with Arabian heavy crude oil**

| Magnetite | MOR | Interfacial Tension, IFT, with sea water, mNm⁻¹ | Efficiency index (WSL, η %) |
|---|---|---|---|
| Oleic coated Fe₃O₄/p(AMPS) method 7 | 1:1 | 4.2 | 95 |
| | 1:5 | 5.2 | 85 |
| | 1:10 | 10.3 | 90 |
| Magnetite/oleic acid (method 6) | 1:1 | 9.2 | 80 |
| | 1:5 | 113 | 75 |
| | 1:10 | 12.4 | 75 |
| Magnetite/ammonium rosinate (method 5) | 1:1 | 6.5 | 75 |
| | 1:5 | 8.5 | 70 |
| | 1:10 | 9.3 | 70 |
| Magnetite (method 2) | 1:1 | 23.5 | 35 |
| | 1:5 | 25.3 | 30 |
| | 1:10 | 27.3 | 25 |

### 63) Application of magnetite as corrosion inhibitors

Oleic coated Fe₃O₄/p(AMPS) core shell magnetic nanogel, prepared by method 7, was selected to measure its corrosion inhibition efficiency for carbon steel alloy in 1 M HCl. The effect of inhibitor concentration and temperature on both anodic and cathodic curves of carbon steel in 1 M HCl solution was studied using potentiodynamic polarization technique. Evaluation of corrosion inhibition efficiencies (I %) can also be performed through electrochemical experiments which consist of the determination of intensity/potential curves. The data of electrochemical measurements at different temperature were listed in Table 4. The data indicated the prepared oleic coated Fe₃O₄/p(AMPS) core shell magnetic nanogel has great efficiency as corrosion inhibitor from 87.2 to 95 %.

**Table 4: Data from electrochemical impedance spectroscopy measurements of carbon steel in 1M HCl solution in the absence and presence of various concentrations of oleic coated Fe₃O₄/p(AMPS) core shell magnetic nanogel inhibitor.**

| **Cone. (ppm)** | **Rₛ (ohm cm²**) | **Rₜ (ohm cm²)** | **C_{dl} (µF cm⁻²)** | **I%** |
|---|---|---|---|---|
| **0** | 1.522 | 49.28 | 1020 | |
| **50** | 87.2 | 387.2 | 44.35 | 87.2 |
| **100** | 91.3 | 566.9 | 25.97 | 91.3 |
| **150** | 93.39 | 746.2 | 0.106 | 93.39 |
| **200** | 94.82 | 952.8 | 0.66 | 94.82 |
| **250** | 95.07 | 1017 | 0.078 | 95.07 |

### 6.4) Application of the prepared magnetite for enhanced oil recovery

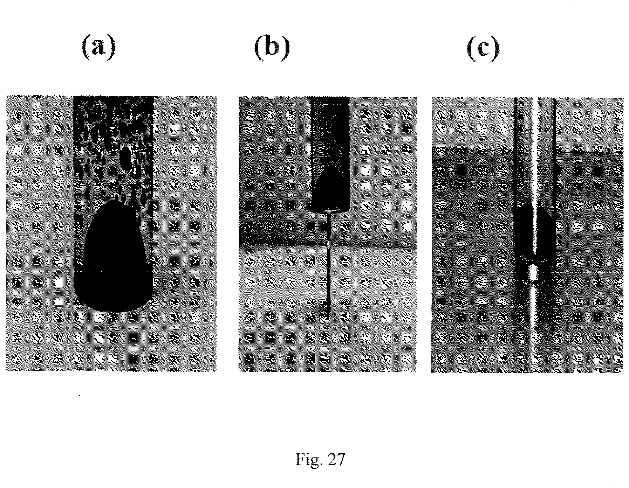

The effect of magnetic field on the wetting properties of crude oil and water droplet on the magnetite films was estimated from contact angle measurements. Figure 27 shows the effect of magnet position on the contact angle of crude oil containing magnetic materials (method 7) which change the magnetic particles from hydrophilic particles to hydrophobic particles in water with changing the direction of magnetic field. On the other hand, we report a magnetic technique for altering the apparent contact angle of sea water droplets devoid of any magnetically susceptible particles. The technique involves placement of water and crude oil droplets onto a superparamagnetic film composed of coated magnetite (Fe₃O₄) nanoparticles. These results establish that the wetting behavior of water and crude oil droplets unadulterated with magnetic particles may be manipulated with magnetic fields, opening the door to a wide range of possible applications in the field of enhanced oil recovery, Binshan et al. China Particuology, 2006,4(1), 41-46.

Wettability is defined as the ability of a fluid to wet a solid surface in the presence of a second fluid. It can be estimated from the contact angle measurements. We determined the contact angles of crude oil droplet over magnetite solid surfaces and sea water droplet over the magnetite surfaces. The data measured and listed in Table 5. The data indicated that the hydrophobic magnetite surface reduced the contact angle of both water and crude oil which changes the wettabiliy of crude oil in the reservoir rocks which indicated the strong ability to apply the magnetite in the field of enhanced oil recovery (Morrow et al., "Wettability and Oil Recovery by Imbibition and Viscous Displacement from Fractured and Heterogeneous Carbonates "project number DE-FC26-02NT15344, University of Wyoming, USA (2006*)).*

**Table(3): IFT, Screen Test for the modified magnetite with Arabian heavy crude oil**

| Magnetite | **Contact angel degree** | |
|---|---|---|
| | Crude oil | **Sea water** |
| Oleic coated Fe₃O₄/p(AMPS) | **20.3±6** | **65.3±6** |
| (method 7) | | |
| Magnetite/oleic acid | **14.1±4** | **37.5±5** |
| (method 6) | | |
| Magnetite/ammonium rosinate | **10.5±3** | **53.4±8** |
| (method 5) | | |
| Magnetite/PVP | **25.3±8** | **47.3±5** |
| Magnetite | **5.72±2.3** | **58.2±3** |
| (method 2) | | |

## Claims

1. Method for preparing superparamagnetic coated magnetite nanoparticles, comprising:
a) providing a first aqueous solution comprising an Fe³⁺-salt;
b) providing a second aqueous solution comprising an iodide salt;
c) mixing the first solution and the second solution;
d) hydrolyzing the mixture obtained in step c) at a temperature in a range from room temperature to 100°C by adjusting the pH to about 8.5-9 or above to obtain a precipitate; and
e) separating the precipitate from the solution,
**characterised in that** prior to, in and/or after at least one of the steps a) to e), a stabilizing agent is added, wherein the stabilizing agent is a surfactant or a surfactant and a polymer.

2. Method according to claim 1, wherein the Fe³⁺-salt is FeCl₃.

3. Method according to claim 1 or 2, wherein the iodide salt is an alkali iodide and/or alkaline earth iodide.

4. Method according to any of the preceding claims, wherein the temperature in step d) is in a range from 40 to 70°C.

5. Method according to any of the preceding claims, the polymer is a hydrophilic polymer.

6. Method according to any of the preceding claims, wherein the stabilizing agent is a surfactant and a polymer.

7. Method according to claim 6, wherein the ratio of surfactant to polymer is from 10:1-0.1:1, preferably 5:1-0.5:1, most preferred 3:1-1:1.

8. Method according to any of the preceding claims, wherein addition of the stabilizing agent is in step a) and/or step d).

9. Method according to any of the preceding claims, wherein iodine, formed in step c), is not removed before or in step d).

## Patentansprüche

1. Verfahren zum Herstellen von superparamagnetischen beschichteten Magnetitnanoteilchen, umfassend:
a) Bereitstellen einer ersten wässrigen Lösung, die ein Fe³⁺-Salz umfasst;
b) Bereitstellen einer zweiten wässrigen Lösung, die ein Iodidsalz umfasst;
c) Mischen der ersten Lösung und der zweiten Lösung;
d) Hydrolysieren der in Schritt c) erhaltenen Mischung bei einer Temperatur im Bereich von Raumtemperatur bis 100°C durch Einstellung des pH-Werts auf etwa 8,5-9 oder darüber, um einen Niederschlag zu erhalten; und
e) Abtrennen des Niederschlags von der Lösung,
**dadurch gekennzeichnet, dass** vor, während und/oder nach wenigstens einem der Schritte a) bis e) ein Stabilisierungsmittel zugegeben wird, wobei das Stabilisierungsmittel ein Tensid oder ein Tensid und ein Polymer ist.

2. Verfahren nach Anspruch 1, wobei das Fe³⁺-Salz FeCl₃ ist.

3. Verfahren nach Anspruch 1 oder 2, wobei das Iodidsalz ein Alkaliiodid und/oder Erdalkaliiodid ist.

4. Verfahren nach einem der vorangehenden Ansprüche, wobei die Temperatur in Schritt d) in einem Bereich von 40°C bis 70°C ist.

5. Verfahren nach einem der vorangehenden Ansprüche, wobei das Polymer ein hydrophiles Polymer ist.

6. Verfahren nach einem der vorangehenden Ansprüche, wobei das Stabilisierungsmittel ein Tensid und ein Polymer ist.

7. Verfahren nach Anspruch 6, wobei das Verhältnis von Tensid zu Polymer von 10:1-0,1:1, bevorzugt 5:1-0,5:1, am bevorzugtesten 3:1-1:1 ist.

8. Verfahren nach einem der vorangehenden Ansprüche, wobei eine Zugabe des Stabilisierungsmittels in Schritt a) und/oder Schritt d) ist.

9. Verfahren nach einem der vorangehenden Ansprüche, wobei Iod, gebildet in Schritt c), nicht vor oder in Schritt d) entfernt wird.

## Revendications

1. Procédé de préparation de nanoparticules superparamagnétiques de magnétite revêtues, comprenant les étapes consistant à :
a) fournir une première solution aqueuse comprenant un sel de Fe³⁺ ;
b) fournir une deuxième solution aqueuse comprenant un sel d'iodure ;
c) mélanger la première solution et la deuxième solution ;
d) hydrolyser le mélange obtenu à l'étape c) à une température située dans un intervalle allant de la température ambiante à 100 °C en ajustant le pH à environ 8,5 à 9 ou à un pH supérieur afin d'obtenir un précipité ; et
e) séparer le précipité de la solution,
**caractérisé en ce que** avant, au cours, et/ou après au moins l'une des étapes a) à e), un agent stabilisant est ajouté, l'agent stabilisant étant un agent tensio-actif ou un agent tensio-actif et un polymère.

2. Procédé selon la revendication 1, dans lequel le sel de Fe³⁺ est le F2Cl₃.

3. Procédé selon la revendication 1 ou la revendication 2, dans lequel le sel d'iodure est un iodure alcalin et/ou un iodure alcalino-terreux.

4. Procédé selon l'une quelconque des revendications précédentes, dans lequel la température à l'étape d) se situe dans l'intervalle de 40 à 70 °C.

5. Procédé selon l'une quelconque des revendications précédentes, dans lequel le polymère est un polymère hydrophile.

6. Procédé selon l'une quelconque des revendications précédentes, dans lequel l'agent stabilisant est un agent tensio-actif et un polymère.

7. Procédé selon la revendication 6, dans lequel le rapport de l'agent tensio-actif au polymère est de 10/1 à 0,1/1, préférablement de 5/1 à 0,5/1, plus préférablement encore de 3/1 à 1/1.

8. Procédé selon l'une quelconque des revendications précédentes, dans lequel l'addition de l'agent stabilisant s'effectue à l'étape a) et/ou à l'étape d).

9. Procédé selon l'une quelconque des revendications précédentes, dans lequel l'iodure, formée à l'étape c) n'est pas éliminée avant ou à l'étape d).
